# EUROPÄISCHE PATENTSCHRIFT

(11) **EP 1 805 193 B1**
(45) Veröffentlichungstag und Bekanntmachung des Hinweises auf die Patenterteilung: **29.12.2010**
(21) Anmeldenummer: 05804010.6
(22) Anmeldetag: 17.10.2005
(51) Int. Cl.: C07F 9/50, C07F 9/53

(54) **VERFAHREN ZUR HERSTELLUNG SUBSTITUIERTER PHOSPHANE**
METHOD FOR THE PRODUCTION OF SUBSTITUTED PHOSPHANES
PROCEDE POUR PREPARER DES PHOSPHANES SUBSTITUES

(30) Priorität: 27.10.2004 DE 102004052725
(43) Veröffentlichungstag der Anmeldung: 11.07.2007
(73) Patentinhaber: Zylum Beteiligungsgesellschaft mbH & Co. Patente II KG, 12529 Schönefeld / Waltersdorf (DE)
(72) Erfinder: THIEL, Werner, 67661 Kaiserslautern (DE); SUN, Yu, 67655 Kaiserslautern (DE); HIENZSCH, Antje, 04889 Plückuff (DE)
(74) Vertreter: Zech, Stefan Markus
(86) Internationale Anmeldenummer: PCT/DE2005/001856
(87) Internationale Veröffentlichungsnummer: WO 2006/045272

(56) Entgegenhaltungen:
- US-A- 4 575 499
- US-B1- 6 613 717
- SUN Y ET AL: "PHOSPHINE LIGANDS BEARING DONOR SITES FOR THE BINDING OF LEWIS ACIDS: SYNTHESIS, CHARACTERIZATION, AND APPLICATION IN HOMOGENEOUS CATALYSIS" ORGANOMETALLICS, ACS, WASHINGTON, DC, US, Bd. 23, Nr. 22, 25. Oktober 2004 (2004-10-25), Seiten 5260-5267, XP001235681 ISSN: 0276-7333
- DATABASE BEILSTEIN [Online] BEILSTEIN INSTITUTE FOR ORGANIC CHEMISTRY, FRANKFURT-MAIN, DE; XP002364233 Database accession no. Reaction ID 2888682 & STANEK J. ET AL: J. MED. CHEM., Bd. 36, Nr. 1, 1993, Seiten 46-54,
- CHAPOULAUD V G ET AL: "Synthesis of 4-(2-diphenylphosphino-1-naphthyl)-2-pheny lquinazoline; a potential P-N chelating ligand for asymmetric catalysis" TETRAHEDRON LETTERS, ELSEVIER, AMSTERDAM, NL, Bd. 40, Nr. 51, 17. Dezember 1999 (1999-12-17), Seiten 9005-9007, XP004184792 ISSN: 0040-4039
- CONNOLLY, D. ET AL.: "Preparation and Resolution of a Modular Class of Axially Chiral Quinazoline-Containing Ligands and Their Application in Asymmetric Rhodium-Catalyzed Olefin Hydroboration" J. ORG. CHEM., Bd. 69, Nr. 20, 1. Oktober 2004 (2004-10-01), Seiten 6572-6589, XP002364228

## Beschreibung

Die Neuerung bezieht sich auf ein Verfahren zur Herstellung substituierter Phosphane und auf eine Gruppe nach dem Verfahren hergestellter substituierter Phosphane. Phosphane sind organische Verbindungen des dreiwertigen Phosphors mit der allgemeinen Formel P(R)(R')(R"), wobei R, R' bzw. R" gleichartige oder unterschiedliche organische Substituenten sein können. Phosphane, Phosphanoxide, -sulfide oder -selenide finden als Liganden in Koordinationsverbindungen Verwendung. Sie spielen eine zentrale Rolle bei der Steuerung der Aktivität und Selektivität von Katalysatoren.

Aufgrund des kommerziellen Interesses an diesen Verbindungen wurden zahlreiche Verbindungsgruppen bereits dargestellt. Auch aromatisch und heteroaromatisch substituierte Phosphane sind bereits bekannt. Sie finden in der Technik in verschiedenen Bereichen Verwendung, z. B. als Liganden in homogenkatalytischen Verfahren.

### Stand der Technik

Seit ca. 1970 wird versucht zunehmend komplexe Substitutionsmuster in den Substituenten R, R' und R" zu realisieren, um die chemischen und physikalischen Eigenschaften dieser Verbindungen an aktuelle Fragestellungen der Technik anzupassen. Zu nennen sind z. B. chelatisierende Phosphane (mehrere Phosphorzentren in einem Molekül) und chirale Phosphane (für enantioselektive Katalysen) aber auch Phosphane die Heterozyklen an den Substituenten tragen. Ein Beispiel für ein heterozyklisch substituiertes Phosphan ist Tri(2-pyridyl)phosphan, das als Ligand bei verschiedenen auch technisch relevanten Katalysen eingesetzt wird.

Phosphane werden am einfachsten durch Umsetzung von Verbindungen des Typs PX₃ (X = Cl, Br, I, OR, NR₂) mit Kohlenstoffnukleophilen (in der Regel Organometallverbindungen, z. B. LiR, XMgR, MgR₂, etc.) erhalten. Dies beschränkt die Variationsmöglichkeiten für die Gruppen R, da von vielen möglichen Typen keine Organometallverbindungen erhalten werden können und z. B. acide Gruppen nicht toleriert werden. Deshalb ist eine Vielzahl möglicher Verbindungen überhaupt noch nicht bekannt. Dazu zählen heteroaromatisch substituierte Phosphane mit Pyrazol- bzw. Pyrimidin-Resten am Aromaten, die auf dem oben beschriebenen Weg nicht hergestellt werden können. Auch entsprechend substituierte Phosphanoxide, -sulfide oder-selenide sind bisher unbekannt.

Der Erfindung liegt damit das Problem zugrunde, einen Syntheseweg für weitere Phosphane und diese Phosphane für die Steuerung der Aktivität und Selektivität von Katalysatoren bereitzustellen.

Diese Aufgabe wird durch die Erfindung dadurch gelöst, dass heterocyclische Substituenten über die Einführung von Acetylgruppen an aromatischen Gruppen aufgebaut werden. Aus SUN Y ET AL: "PHOSPHINE LIGANDS BEARING DONOR SITES FOR THE BINDING OF LEWIS ACIDS: SYNTHESIS, CHARACTERIZATION, AND APPLICATION IN HOMOGENEOUS CATALYSIS" ORGANOMETALLICS, ACS, WASHINGTON, DC, US, Bd. 23, Nr. 22, 25. Oktober 2004 (2004-10-25), Seiten 5260-5267, kannte man bereits die Herstellung der Verbindung 3 gemäss Anspruch 1 (Scheme 1). Diese Veröffentlichung beschreibt aber nicht die Weiterreaktionzu den Verbindungen 4-7. Auf diese Weise werden bisher unbekannte Vertreter der Verbindungsklassen Phosphane, Phosphanoxide, -sulfide und -selenide zugänglich gemacht. Dies war überraschend, da bei aromatischen Phosphanen dieser Syntheseweg bisher nicht bekannt und nicht zu erwarten war.

Die mit der Erfindung erzielten Vorteile bestehen insbesondere darin, dass mit den erfindungsgemäßen Verfahrensschritten bisher unbekannte Phosphane mit einer oder mehreren Aryl(3(5)-pyrazolyl)- bzw. Aryl(4-pyrimidinyl)-Gruppen in guten Ausbeuten über wenige Stufen gezielt aufgebaut werden können. Die Synthese ist sehr variabel und erlaubt eine breite Variation sowohl des Grundgerüsts als auch der einzelnen Substituenten.

Die nach dem erfindungsgemäßen Verfahren hergestellten Phosphane haben technische Bedeutung sowohl in der industriellen homogenen Katalyse (z. B. als Liganden bei Hydrierungen, C-C-Kupplungsreaktionen, Hydroformierung (auch in Zweiphasen-Systemen), u.v.m.) als auch in anderen Bereichen der Komplexchemie (z. B. leitfähige Polymere, Materialwissenschaften, etc.).

Die Erfindung soll an den folgenden bevorzugten Beispielen für die Synthesen heterocyclisch substituierter Phosphane dargestellt werden. Die Herstellung der einzelnen Produkte wird dann nachfolgend erläutert.

### Beispiele für synthetisierte heterocyclisch substituierte Phosphane

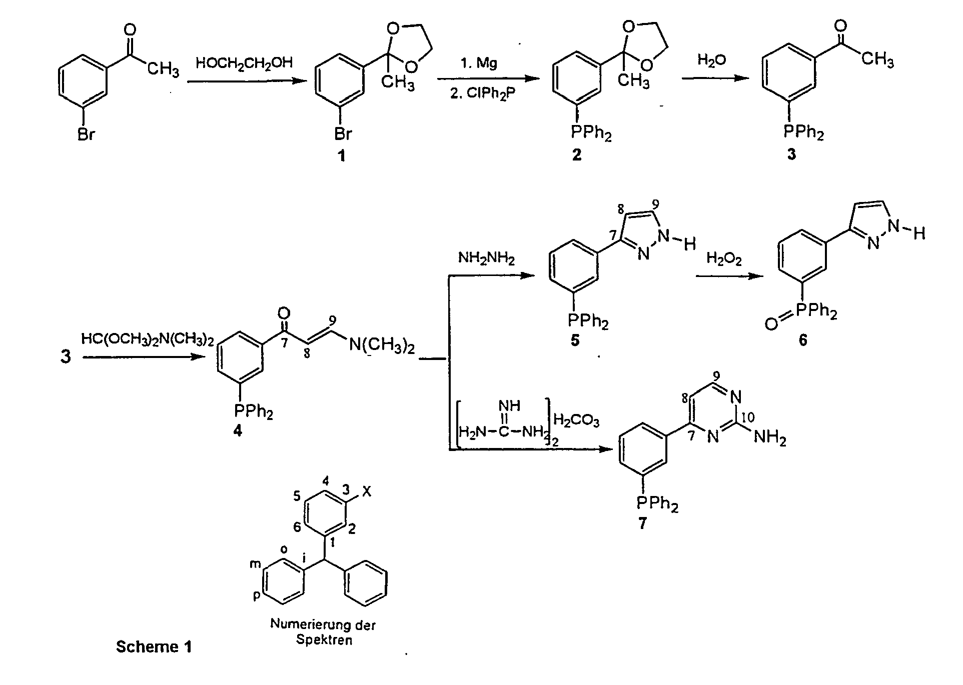

**2-(3-Bromophenyl)-2-methyl-1,3-dioxolan (1).** 30.1 g (151 mmol) (3-Bromphenyl)methyl-keton und 13.8 g (222 mmol) Ethylenglycol werden in 120 mL Benzol gelöst, mit 60 mg 4-Toluolsulfonsäure versetzt und solange unter Rückfluß an einem Wasserabscheider (Dean-Stark-Apparat) gekocht, bis kein Wasser mehr abgeschieden wird. Die Reaktionslösung wird mit 50 mL einer 0.5 M NaHCO₃-Lösung gewaschen, die organische Phase wird abgetrennt und über wasserfreiem MgSO₄ getrocknet. Nach Entfernung des Benzols am Rotationsverdampfer wird der Rückstand das Produkt in 97%iger Reinheit (GC) in nahezu quantitativer Ausbeute als farblose, ölige Flüssigkeit. C₁₀H₁₁O₂Br.

**[3-(2-Methyl-1,3-dioxolan-2-yl)phenyl]diphenylphosphan (2).** 19.8 g (81.5 mmol) 2-(3-Bromophenyl)-2-methyl-1,3-dioxolan werden unter Schutzgas langsam zu einer Suspension von 2.1 g (87.5 mmol) Magnesium in 100 mL wasserfreiem THF getropft. Nach Bildung der Grignard-Verbindung wird eine Lösung von 16.3 g (73.9 mmol) Chlorodiphenylphosphan in 50 mL wasserfreiem THF bei 0°C langsam zugetropft. Danach wird weitere 2 h bei 40 °C gerührt. Nach Zutropfen von 50 mL einer entgasten, konzentrierten NH₄Cl Lösung Wird die Mischung unter Schutzgas mit Toluol/Wasser extrahiert, die organische Phase über wasserfreiem MgSO₄ getrocknet und das Lösungsmittel am Rotationsverdampfer entfernt. Der Rückstand wird aus Methanol umkristallisiert. Man erhält das Produkt in über 80%-iger Ausbeute als farblosen kristallinen Feststoff (Reinheit: >98%, GC). C₂₂H₂₁O₂P.

**(3-Acetylphenyl)diphenylphosphan (3).** 25.7 g (73.9 mmol) [3-(2-Methyl-1,3-dioxolan-2-yl)-phenyl]diphenylphosphan werden unter Schutzgas in 240 mL eines THF/Wasser-Gemisches (1:1) gelöst und mit 0.9 g 4-Toluolsulfonsäure versetzt. Die Mischung wird solange unter Rückfluß gekocht, bis sich die Ausgangsverbindung vollständig umgesetzt hat. Nach Zugabe von 50 mL einer entgasten 0.5 M NaHCO₃-Lösung gewaschen und Extraktion mit entgastem Toluol wird die organische Phase wird abgetrennt und über wasserfreiem MgSO₄ getrocknet. Das Lösungsmittel wird am Rotationsverdampfer entfernt und der Rückstand durch Säulenchromatographie gereinigt. Man erhält das Produkt in über 70%-iger Ausbeute als farbloses Öl (Reinheit: >98%, GC). C₂₀H₁₇OP.

**[3-(3-Dimethylamino-1-oxoprop-2-en-yl)phenyl]diphenylphosphan (4).** Eine Mischung aus 9.9 g (32.6 mmol) (3-Acetylphenyl)diphenylphosphan und 7.7 g (64.7 mmol) N,N-Dime-thylformamiddimethylacetal wird unter Schutzgas für 2 h unter Rückfluß erhitzt. Nach Entfernen der flüchtigen Bestandteile im Hochvakuum kristallisiert das Produkt bei Raumtemperatur. Der orangefarbene Feststoff wird noch mit Diethylether gewaschen. (Reinheit: >95% ³¹P{¹H} NMR). C₂₃H₂₂ONP. ¹H NMR (250.1 MHz, 25°C, CDCl₃): δ 7.87 (t, 2H, *J*_{HH} = 8.8 Hz), 7.73 (d, 1H, ³*J*_{HH} = 12.3 Hz, 9-H), 7.42-7.26 (m, 12H), 5.56 (d, 1H, 8-H), 2.95 (bd, 6H, N(C*H*₃)₂). ¹³C{¹H} NMR (62.9 MHz, 25°C, CDCl₃): δ 188.6 (C-7), 154.7 (C-9), 141.0 (d, ³*J*_{PC} = 7.2 Hz, C-3), 137.5 (d, ¹*J*_{PC} =12.0 Hz, C-1), 137.4 (d, ¹*J*_{PC} = 10.6 Hz, C-i), 136.4 (d, ²*J*_{PC} = 16.3 Hz, C-2), 134.2 (d, ²*J*_{PC} = 19.7 Hz, C-o), 133.4 (d, ²*J*_{PC} = 23.0 Hz, C-6), 129.2 (s, C-p), 129.0 (d, ³*J*_{PC} = 6.7 Hz, C-m), 128.9 (d, ³*J*_{PC} = 5.8 Hz, C-5), 128.4 (s, C-4), 92.6 (C-8), 45.5, 37.6 (N(*C*H₃)₂). ³¹P{¹H} NMR (101.2 MHz, 25°C, CDCl₃): δ -6.36.

**[3-(3-Pyrazolyl)phenyl]diphenylphosphan (5).** Eine Lösung aus 1.8 g (5.1 mmol) [3-(3-Dimethylamino-1-oxoprop-2-en-yl)phenyl]diphenylphosphan und 2.6 g (51 mmol) Hydrazinmonohydrat in 20 ml Ethanol werden unter Schutzgas für 3h zum Sieden erhitzt. Nach Abkühlen der Lösung auf Raumtemperatur wird das Lösungsmittel im Vakuum entfernt. Der verbleibende farblose ölige Rückstand wird aus Essigsäureethylester umkristallisiert. Man erhält einen farblosen Feststoff (Ausbeute > 70%). C₂₁H₁₇N₂P. ¹H NMR (250.1 MHz, 25 °C, DMSO-d₆): δ 12.88 (b, 1 H, N-H), 7.81-7.23 (m, 14H), 7.10 (t, 1 H, *J*_{HH} = 7.3 Hz), 6.60 (d, 1 H, ³*J*_{HH}= 2.2 Hz, 8-H). ³¹P{¹H} NMR (101.2 MHz, 25°C, DMSO-d₆): δ -7.55.

**[3-(3-Pyrazolyl)phenyl]diphenylphosphanoxid (6).** Die Oxidation von [3-(3-Pyrazolyl)-phenyl]diphenylphosphan mit 35 %iger H₂O₂Lösung ergibt das Phosphanoxid in quantitativer Ausbeute. Die Verbindung wurde mittels Röntgenstrukturanalyse charakterisiert.

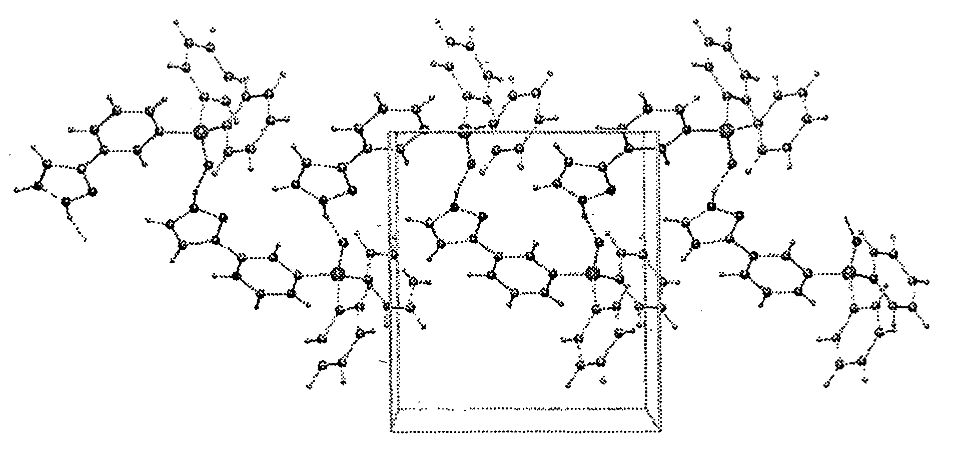

**[3-(2-Amino-4-pyrimidinyl)phenyl]diphenylphosphan (7).** 2.9 g (7.9 mmol) [3-(3-Dimethyl-amino-1-oxoprop-2-en-yl)phenyl]diphenylphosphan und 1.5 g (8.5 mmol) Guanidiniumcarbonat werden unter Schutzgas in 20 mL Ethanol gelöst und mit einer entgasten Lösung vom 0.95 g KOH in 4 mL H₂O versetzt. Die Mischung wird für 2h auf 120°C erhitzt, danach bis pH<4 mit verdünnter HCl und mit 25%iger Ammoniaklösung neutralisiert. Es fällt ein blaßgelber Niederschlag aus, der abfiltriert, mit Diethylether gewaschen und getrocknet wird (Ausbeute: >60%, Reinheit: >98%, ³¹P{¹H} NMR). C₂₂H₁₈N₃P. ¹H NMR (250.1 MHz, 25°C, DMSO-d₆): δ 8.26 (d, 1H, ³*J*_{HH}= 5.2 Hz, 9-H), 8.14-8.02 (m, 2H), 7.53-7.17 (m, 12H), 6.99 (d, 1H, 8-H), 6.68 (bs, 2H, N*H*₂). ¹³C{¹H} NMR (62.9 MHz, 25 °C, DMSO-d₆): δ 164.7 (C-10), 163.9 (C-7), 160.1 (C-9), 138.2 (d, ²*J*_{PC} = 18.2 Hz, C-6), 138.2 (d, ³*J*_{PC} = 2.8 Hz, C-3), 137.2 (d, ¹*J*_{PC} = 11.2 Hz, C-i), 135.6 (d, ¹*J*_{PC} = 11.7 Hz, C-1), 134.2 (d, ²*J*_{PC} = 19.6 Hz, C-o), 132.7 (d, ²*J*_{PC} = 28.7 Hz, C-2), 130.1 (d, ³*J*_{PC} = 4.3 Hz, C-5), 130.0 (s, C-p), 129.7 (d, ³*J*_{PC} = 6.8 Hz, C-m), 128.3 (s, C-4), 106.7 (C-8). ³¹P{¹H} NMR (101.2 MHz, 25 °C, DMSO-d₆): δ -7.60.

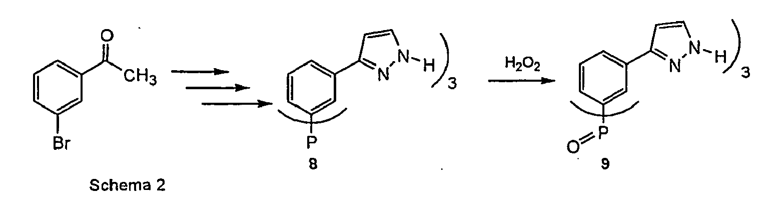

**Tri[3-(3-pyrazolyl)phenyl]phosphan (8)** und **Tri[3-(3-pyrazolyl)phenyl]phosphanoxid (9)** werden analog zu Schema 1 synthetisiert. In diesem Fall wird die Grignard-Verbindung von 1 statt mit Chlorodiphenylphosphan mit Phosphortrichlorid umgesetzt. Als Zwischenstufe wird Tri[3-(3-dimethylamino-1-oxoprop-2-en-yl)phenyl]phosphan erhalten **Tri[3-(3-dimethylamino-1-oxoprop-2-en-yl)phenyl]phosphan.** ¹H NMR (400.1 MHz, 25°C, CDCl₃): δ 7.91, 7.85 (2 d, 6H, ³*J*_{HH} = 7.5Hz, ³*J*_{HH} = 8.5 Hz, 4-H, 6-H), 7.79 (d, 3H, ³*J*_{HH} = 12.2 Hz, =C*H*N(CH₃)₂), 7.44-7.35 (m, 6H, 2-H, 5-H), 5.55 (d, 3H, COCH=), 3.12, 2.85 (2 s, 18H, N(CH₃)₂). ¹³C{¹H} NMR (100.6 MHz, 25°C, CDCl₃): δ 188.2 (C=O), 155.0 (=*C*HN(CH₃)₂), 141.0 (d, ³*J*_{PC} = 7.4 Hz, C-3), 137.1 (d, ¹*J*_{PC} = 12.0 Hz, C-1), 136.4 (d, ²*J*_{PC} = 17.6 Hz, C-6), 133.3 (d, ²*J*_{PC} = 23.1 Hz, C-2), 129.0 (d, ³*J*_{PC} = 6.5 Hz, C-5), 128.6 (s, C-4), 92.7 (COCH=), 45.4, 37.8 (N(CH₃)₂). ³¹P{¹H} NMR (162.0 MHz, 25 °C, CDCl₃): δ -3.89. **Tri[3-(3-pyrazolyl)phenyl]phosphan (8).** ¹H NMR (400.1 MHz, 25 °C, DMSO-d₆): δ 12.94 (br, 3H, N-H), 7.88-7.80 (m, 6H, ar H), 7.71 (d, 3H, ³*J*_{HH}= 2.4 Hz, 5_{pz}-H), 7.51-7.44 (m, 3H, ar H), 7.23-7.18 (m, 3H, ar H), 6.65 (d, 3H, 4_{pz}-H). C{¹H} NMR (100.6 MHz, 25 °C, DMSO-d₆): δ 148.7 (C-3_{pz}), 138.0 (d, ¹*J*_{PC}= 12.0 Hz, C-1), 134.2 (d, ³*J*_{PC} = 6.5 Hz, C-3), 133.0 (d, ²*J*_{PC}= 16.6 Hz, C-6), 130.9 (d, ²*J*_{PC} = 24.0 Hz, C-2), 130.0 (d, ³*J*_{PC} = 6.5 Hz, C-5), 126.8 (s, C-4), 102.8 (C-4_{pz}), C-5_{pz} not observed. ³¹P{¹H} NMR (162.0 MHz, 25 °C, DMSO-d₆): δ -4.44.

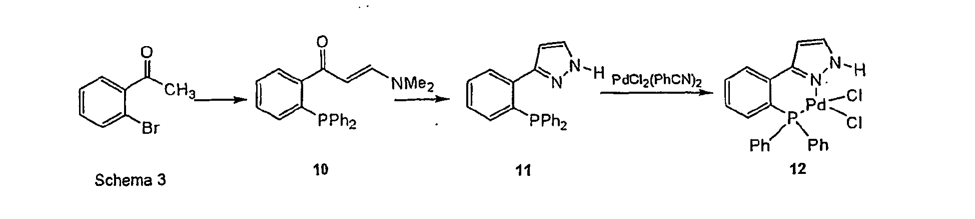

**[2-(3-Dimethylamino-1-oxoprop-2-en-yl)phenyl]diphenylphosphan (10). 10** wird nach dem gleichen Reaktionsweg synthetisiert, wie die isomere Verbindung **4.** Man geht hierbei von (2-Bromphenyl)methylketon anstelle von (3-Bromphenyl)methylketon aus. Ausbeute 85%. ¹H NMR (400.1 MHz, 25 °C, CDCl₃): δ 7.66-7.63 (m, 1H, 3-H), 7.38 (td, ³*J*_{HH} = 7.5 Hz, ⁴*J*_{HH} =1.2 Hz, 1H, 5-H or 4-H), 7.31-7.27 (m, 12H, ar H, =C*H*N(CH₃)₂), 7.07-7.04 (m, 1 H, 6-H), 5.42 (d, ³*J*_{HH} = 12.5 Hz, 1 H, COCH=), 2.96, 2.71 (2s, 6H, N(CH₃)₂). ¹³C{¹H} NMR (100.6 MHz, 25°C, CDCl₃): δ 192.0 (C=O), 155.0 (=*C*HN(CH₃)₂), 148.1 (d, ²*J*_{PC} = 27.0 Hz, C-2), 139.3 (d, ¹*J*_{PC} = 12.1 Hz, C-i), 136.5 (d, ²*J*_{PC} = 19.5 Hz, C-6), 135.0 (s, C-1), 134.2 (d, ²*J*_{PC} = 19.8 Hz, C-o), 129.6 (s, C-5), 128.7 (s, C-4), 128.6 (d, ³*J*_{PC} = 6.7 Hz, C-m), 128.5 (s, C-p), 127.9 (d, ³*J*_{PC} = 5.4 Hz, C-3), 97.1 (COCH=), 45.2, 37.3 (N(CH₃)₂). ³¹P{¹H} NMR (162.0 MHz, 25 °C, CDCl₃): δ -8.76.

**[2-(3-Pyrazotyl)phenyl]diphenylphosphan (11). 11** wird nach dem gleichen Reaktionsweg synthetisiert, wie die isomere Verbindung **5.** Man geht hierbei von **10** aus (Schema 3). Ausbeute 96%. ¹H NMR (400.1 MHz, 25°C, DMSO-d₆): δ 12.94 (br, 1 H, N-H), 7.66-7.62 (m, 2H, 3-H, 5_{pz}-H), 7.44 (t, ³*J*_{HH} = 7.4 Hz, 1H, 4-H), 7.36-7.34 (m, 6H, m, p-H), 7.27 (t, 1 H, 5-H), 7.19-7.15 (m, 4H, o-H), 6.92-6.90 (m, 1H, 6-H), 6.30 (br, 1H, 4_{pz}-H). ¹³C{¹H} NMR (100.6 MHz, 25 °C, DMSO-d₆): δ 150.8 (C-3_{pz}), 140.2 (C-5_{pz}), 138.8 (br, C-i), 135.9 (d, ²*J*_{PC} = 18.8 Hz, C-2), 134.8 (s, C-1), 134.2 (d, ²*J*_{PC} =19.9 Hz, C-o), 132.1 (d, ²*J*_{PC} = 9.2 Hz, C-6), 130.5 (d, ³*J*_{PC} = 4.8 Hz, C-5), 129.7 (s, C-4), 129.4 (d, ³*J*_{PC} = 6.5 Hz, C-m), 129.4 (s, C-p), 128.5 (s, C-3), 106.5 (C-4_{pz}). ³¹P{¹H} NMR (162.0 MHz, 25°C, DMSO-d₆): δ -10.46.

Von **11** kann der Palladiumdichloro-Komplex **12** erhalten werden (Molekülstruktur aus Röntgenstrukturanalyse unten stehend). Ausbeute: quantitativ.

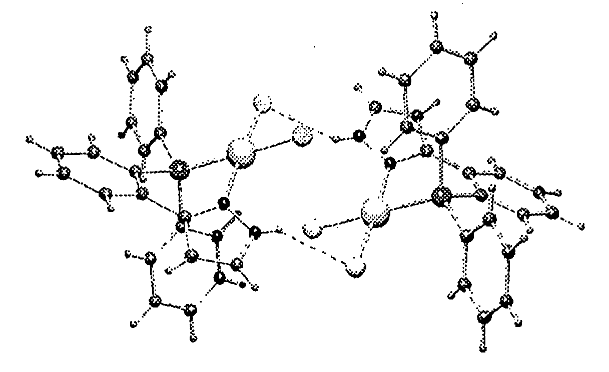

**Dichloro{[2-(3-pyrazolyl)phenyl]diphenylphosphan}palladium(II) (12).** ¹H NMR (400.1 MHz, 25 °C, DMSO-d₆): δ 13.23 (br, 1 H, N-H), 8.15-8.12 (m, 1 H, 3-H), 7.99 (br, 1 H, 5_{pz}-H), 7.82 (t, ³*J*_{HH} = 7.4 Hz, 1 H, 4-H), 7.65-7.45 (m, 11 H, ar H), 7.13 (br, 1 H, 4_{pz}-H), 6.99-6.95 (m, 1H, 6-H). ³¹P{¹H} NMR (162.0 MHz, 25 °C, DMSO-d₆): δ 26.96.

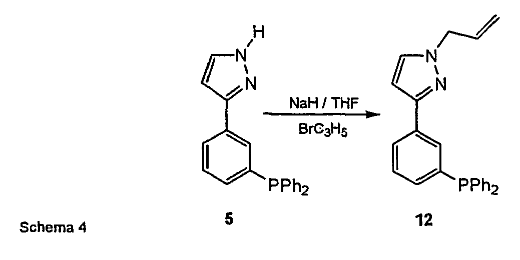

**[3-(1-Allylpyrazol-3-yl)phenyl]diphenylphosphan (12).** 25 mmol **5** werden in 50 ml THF gelöst und mit 25 mmol NaH versetzt. Nach Ende der Wasserstoffentwicklung werden 25 mmol Allylbromid zugegeben und die Mischung für 4 h unter Rückfluß erhitzt. Nach Abkühlen auf Raumtemperatur wird vom NaBr-Niederschlag abfiltriert und das Lösungsmittel im Vakuum entfernt. Es verbleibt ein farbloses Öl. Ausbeute: 98%. ¹H NMR (400.1 MHz, 25 °C, DMSO-d₆): δ 7.80-7.25 (m, 14H, ar H, 5_{pz}-H), 7.06 (t, 1H, ³*J*_{HH} = 6.6 Hz, 5-H), 6.63 (d, 1H, ³*J*_{HH} = 2.4 Hz, 4_{pz}-H), 6.07-5.96 (m, 1 H, -C*H*=CH₂), 5.20-5.11 (m, 2H, - CH=C*H*₂), 4.75 (d, 2H, ³*J*_{HH}= 5.7 Hz, -C*H*₂CH=). ¹³C{¹H} NMR (100.6 MHz, 25 °C, DMSO-d₆): δ 150.5 (C-3_{pz}), 139.4 (C-5_{pz}), 137.6 (d, ¹*J*_{PC} = 12.0 Hz, C-i), 134.7 (-CH=CH₂), 134.1 (d, ²*J*_{PC} = 19.4 Hz, C-o), 132.9 (d, ³*J*_{PC} = 2.8 Hz, C-3), 132.8 (d, ²*J*_{PC} = 14.8 Hz, C-6), 132.4 (d, ¹*J*_{PC} = 9.2 Hz, C-1), 130.9 (d, ²*J*_{PC} = 25.0 Hz, C-2), 130.0 (d, ³*J*_{PC} =4.6 Hz, C-5), 129.8 (s, C-p), 129.6 (d, ³*J*_{PC} = 6.5 Hz, C-m), 126.7 (s, C-4), 118.7 (-CH=*C*H₂), 103.6 (C-4_{pz}), 54.7 (-*C*H₂CH=). ³¹P{¹H} NMR (162.0 MHz, 25 °C, DMSO-d₆): δ-4.90.

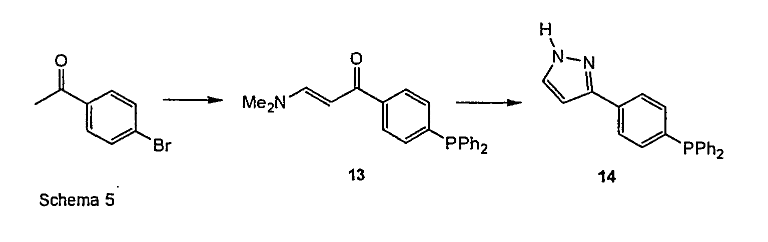

**[4-(3-Dimethylamino-1-oxoprop-2-en-yl)phenyl]diphenylphosphan (13). 13** wird nach dem gleichen Reaktionsweg synthetisiert, wie die isomeren Verbindungen **4** und **10.** Man geht hierbei von (4-Bromphenyl)methylketon aus. Ausbeute 97%. ¹H NMR (400.1 MHz, 25 °C, CDCl₃): δ 7.75-7.10 (m, 15H, ar H, =C*H*N(CH₃)₂), 5.45 (d, ³*J*_{HH} = 12.7 Hz, 1H, COCH=), 2.97, 2.73 (2 s, 6H, N(CH₃)₂). ³¹P{¹H} NMR (162.0 MHz, 25 °C, CDCl₃): δ -8.25.

**[4-(3-Pyrazolyl)phenyl]diphenylphosphan (14).** Diese Verbindung wirde nach dem gleichen Reaktionsweg synthetisiert, wie die isomeren Verbindungen **5** und **10.** Man geht hierbei von 13 aus. ¹H NMR (400.1 MHz, 25 °C, DMSO-d₆): δ 13.02 (br, 1 H, N-H), 7.70-7.12 (m, 15H, ar H, 5_{pz}-H), 6.33 (br, 1H, 4_{pz}-H). ³¹P{¹H} NMR (162.0 MHz, 25 °C, DMSO-d₆): δ - 10.02.

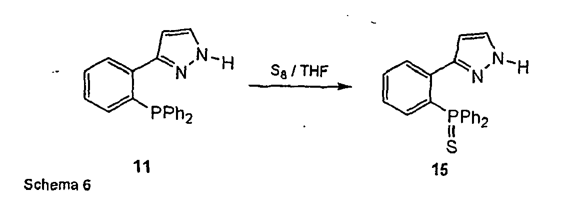

**[2-(3-Pyrazolyl)phenyl]diphenylphosphansulfid (15).** Die Umsetzung von **11** mit elementarem Schwefel in Toluol-Lösung ergibt 15 in quantitativer Ausbeute. ¹H NMR (250.1 MHz, 25 °C, DMSO-d₆): δ 13.00 (b, 1H, N-H), 7.84-7.18 (m, 15H, ar-H, pz-H), 6.62 (d, 1 H, ³*J*_{HH} = 2.2 Hz, pz-H). ³¹P{¹H} NMR (101.2 MHz, 25 °C, DMSO-d₆): δ 52.3.

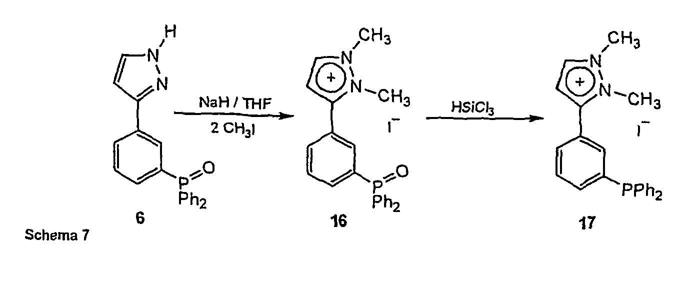

**[3-(1,2-Dimethyl-3-pyrazolium)phenyl]diphenylphosphanoxid (16).** 25 mmol **6** werden in 50 ml THF gelöst und mit 25 mmol NaH versetzt. Nach Ende der Wasserstoffentwicklung, werden 50 mmol Methyliodid zugegeben und die Mischung für 10 h unter Rückfluß erhitzt. Nach Abkühlen auf Raumtemperatur wird das Lösungsmittel im Vakuum entfernt, der Rückstand mit Wasser und Essigester gewaschen und im Vakuum getrocknet. Es verbleibt ein farbloser Feststoff. Ausbeute: 80%. ¹H NMR (400.1 MHz, 25 °C, DMSO-d₆): δ 7.83-7.33 (m, 14H, ar H, 5_{pz}-H), 7.04 (t, 1H, ³*J*_{HH} = 6.6 Hz, 5-H), 6.95 (d, 1 H, ³*J*_{HH}= 2.0 Hz, 4_{pz}-H), 3.13, 3.04 (2xs, 6H, 2×CH₃).³¹P{¹H} NMR (101.2 MHz, 25 °C, DMSO-d₆): δ 25.4.

**[3-(1,2-Dimethyl-3-pyrazolium)phenyl]diphenylphosphan (17).** 20 mmol **16** werden in 50 ml Toluol gelöst, mit einem vierfachen Überschuß HSiCl₃ versetzt und für 4 h auf 100°C erhitzt. Nach Abkühlen auf Raumtemperatur wird vorsichtig mit gesättigter Natriumhydrogencarbonat-Lösung hydrolysiert, die organische Phase abgetrennt und über MgSO₄ getrocknet. Nach Entfernen des Lösungsmittels verbleibt ein farbloser Feststoff. Ausbeute: 55%. ¹H NMR (400.1 MHz, 25°C, DMSO-d₆): δ 7.75-7.31 (m, 14H, ar H, 5_{pz}-H), 7.06 (t, 1 H, ³*J*_{HH}= 6.6 Hz, 5-H), 6.94 (d, 1H, ³*J*_{HH}= 2.0 Hz, 4_{pz}-H), 3.11, 3.07 (2×s, 6H, 2×CH₃). ³¹P{¹H} NMR (101.2 MHz, 25°C, DMSO-d₆): δ 25.4.

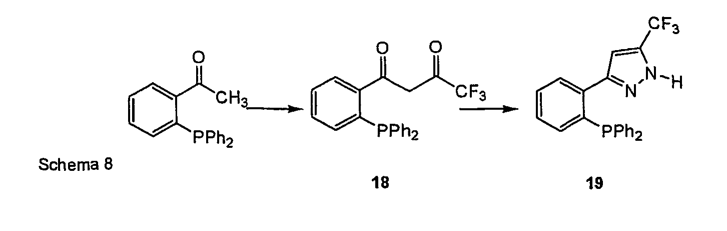

**[2-(4,4,4-Trifluormethyl-1,3-dioxapropanyl)phenyl]diphenylphosphan (18).** 40 mmol o-(Acetylphenyl)diphenylphosphan werden zu einer Suspension von 80 mmol NaOMe in 200 ml THF gegeben. Zu der gelbgefärbten Lösung werden 40 mmol Trifluoressigsäureethylester getropft, worauf ein Farbwechsel nach orange-rot stattfindet. Die Mischung wird 4 h unter Rückfluß gekocht, danach wird das Lösungsmittel im Vakuum entfernt und der Rückstand in 100 ml eines 1:1 Wasser/CHCl₃-Gemisches aufgenommen. Der pH-Wert der wässrigen Lösung wird mit Essigsäure auf 4 eingestellt. Nach dreimaliger Extraktion der wässrigen Phase mit 50 ml CHCl₃ werden die organischen Phasen vereinigt und über MgSO₄ getrocknet. Nach dem Abziehen des Lösungsmittels verbleibt ein gelbliches Öl, aus dem durch Kristallisation aus Essigsäureethylester ein farbloser Feststoff erhalten wurde. Ausbeute 63%. ¹H NMR (400.1 MHz, 25 °C, CDCl₃): δ 7.70-7.31 (m, 14H, ar-H), 4.25 (s, 2H, CH₂). ¹³C{¹H} NMR (100.6 MHz, 25 °C, CDCl₃): δ 194.5, 198.2 (2×C=O), 148.4, 139.1, 136.0 134.7, 134.2, 129.8, 128.6, 128.5, 128.1, 127.5 (all C-ar), 121.3 (q, ¹*J*_{CF} = 265 Hz, CF₃). 65.4 (CH₂). ³¹P{¹H} NMR (162.0 MHz, 25 °C, CDCl₃): δ -6.55.

**[2-(5-Trifluormethylpyrazol-3-yl)phenyl]diphenylphosphan (19). 19** wird in 96%iger Ausbeute durch Kondensation von **18** mit Hydrazin in Ethanol in Analogie zu den Pyrazolen **5, 10** und **14** erhalten. ¹H NMR (400.1 MHz, 25 °C, DMSO-d₆): δ 13.87 (br, 1H, N-H), 7.66-6.90 (m, 15H, ar-H, pz-H). ¹³C{¹H} NMR (100.6 MHz, 25 °C, DMSO-d₆): δ 150.8 (C-3_{pz}), 138.9 136.5, 135.1, 134.2, 132.2, 130.5, 129.8, 129.4, 129.4, 125.4, (q, ¹*J*_{CF} = 271 Hz, CF₃). 113.3 (C-4_{pz}), 92.6 (q, ²*J*_{CF} = 31 Hz, C-5_{pz}). ³¹P{¹H} NMR (162.0 MHz, 25°C, DMSO-d₆): δ -9.22.

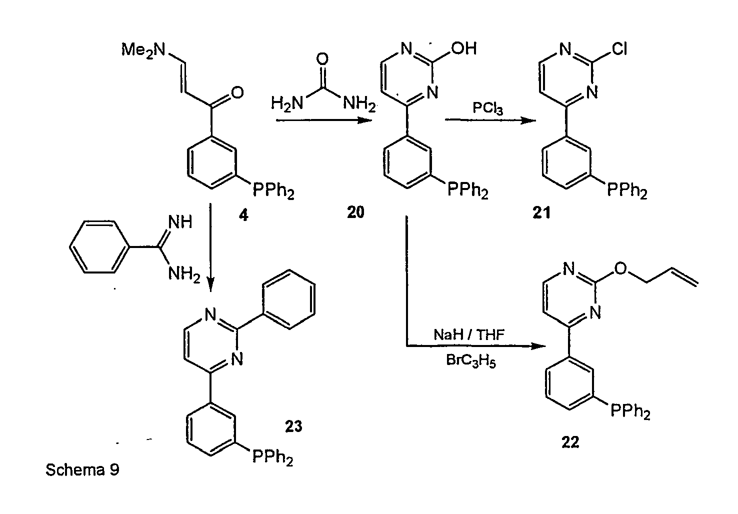

**[3-(2-Hydroxy-4-pyrimidinyl)phenyl]diphenylphosphan (20).** 10 mmol **4** werden in 100 ml wässrigem Ethanol gelöst und mit 25 mmol Harnstoff versetzt. Man erhitzt 7 h unter Rückfluß, entfernt das Lösungsmittel und wäscht den farblosen Feststoff mit Wasser. Umkristallisation aus Chloroform ergibt **20** in über 90%-iger Ausbeute. ESI MS, *m*/*z* (%): 366.3703 (100) [M+H]⁺. ³¹P{¹H} NMR (101.2 MHz, 25 °C, DMSO-d₆): δ -7.45.

**[3-(2-Chloro-4-pyrimidinyl)phenyl]diphenylphosphan (21).** 5 mmol **20** werden in 50 ml CHCl₃ gelöst und mit 10 mmol PCl₃ versetzt. Man erhitzt für 30 min unter Rückfluß, entfernt die flüchtigen Bestandteile im Vakuum und wäscht den farblosen Feststoff mit Wasser. Umkristallisation aus Chloroform ergibt **21** in über 90%-iger Ausbeute. ESI MS, *m*/*z* (%): 375.8154 (100) [M+H]⁺. ³¹P{¹H} NMR (101.2 MHz, 25°C, DMSO-d₆): δ -7.40.

**[3-(2-Chloro-4-pyrimidinyl)phenyl]diphenylphosphan (22).** 5 mmol **20** werden in 50 ml THF gelöst und mit 5 mmol NaH versetzt. Nach Ende der Wasserstoffentwicklung werden 5 mmol Allylbromid zugegeben und die Mischung für 3 h unter Rückfluß erhitzt. Nach Abkühlen auf Raumtemperatur wird vom NaBr-Niederschlag abfiltriert und das Lösungsmittel im Vakuum entfernt. Es verbleibt ein farbloser Feststoff. Ausbeute: quantitativ. ESI MS, *m*/*z* (%): 397.4345 (100) [M+H]⁺. ³¹P{¹H} NMR (101.2 MHz, 25 °C, DMSO-d₆): δ -7.55.

**[3-(2-Phenyl-4-pyrimidinyl)phenyl]diphenylphosphan (23).** 10 mmol **4** werden in 100 ml Ethanol gelöst und mit 10 mmol Benzamidin versetzt. Die Mischung wird für 90 min unter Rückfluß erhitzt, im Anschluß daran wird das Lösungsmittel entfernt. Umkristallisation aus Essigsäureethylester ergibt einen farblosen Feststoff. Ausbeute: 79%. ESI MS, *m*/*z* (%): 417.4674 (100) [M+H]⁺. ³¹P{¹H} NMR (101.2 MHz, 25 °C, DMSO-d₆): δ -7.37.

Die folgenden Abbildungen zeigen beispielhaft und keinesfalls abschließend eine Auswahl von Reaktionsschemata für weitere erfindungsgemäße Verbindungen:

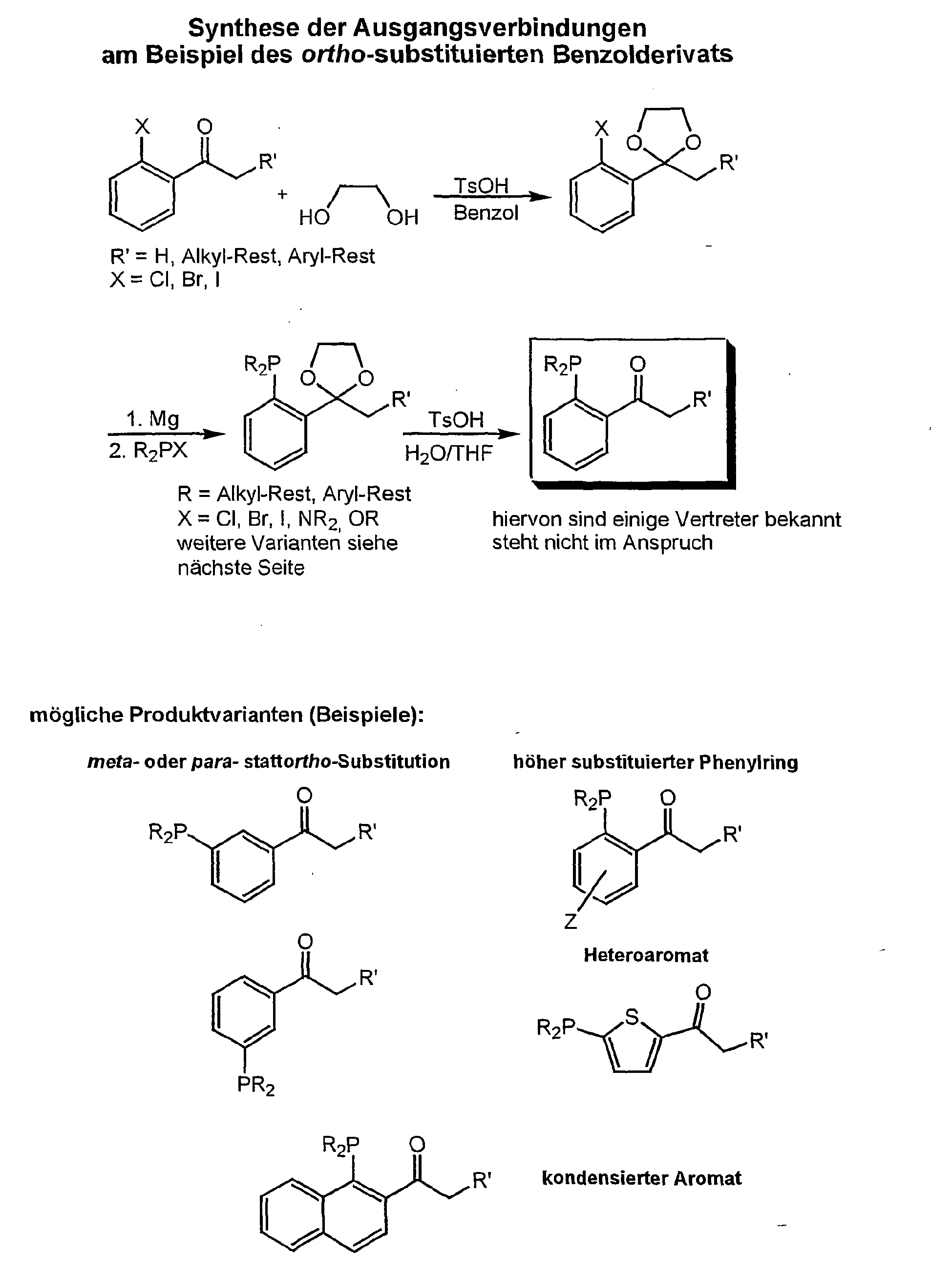

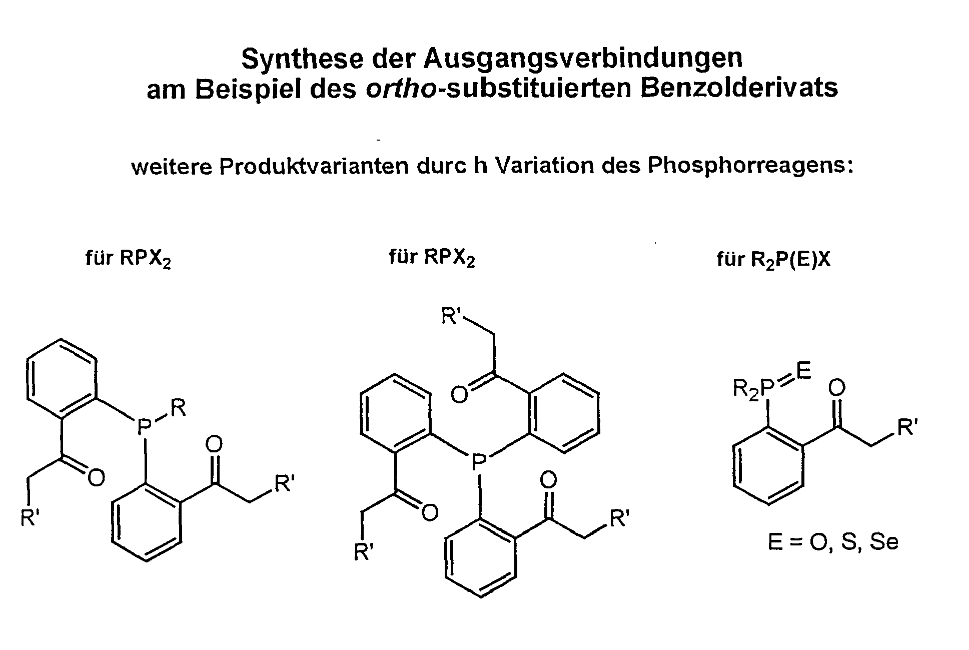

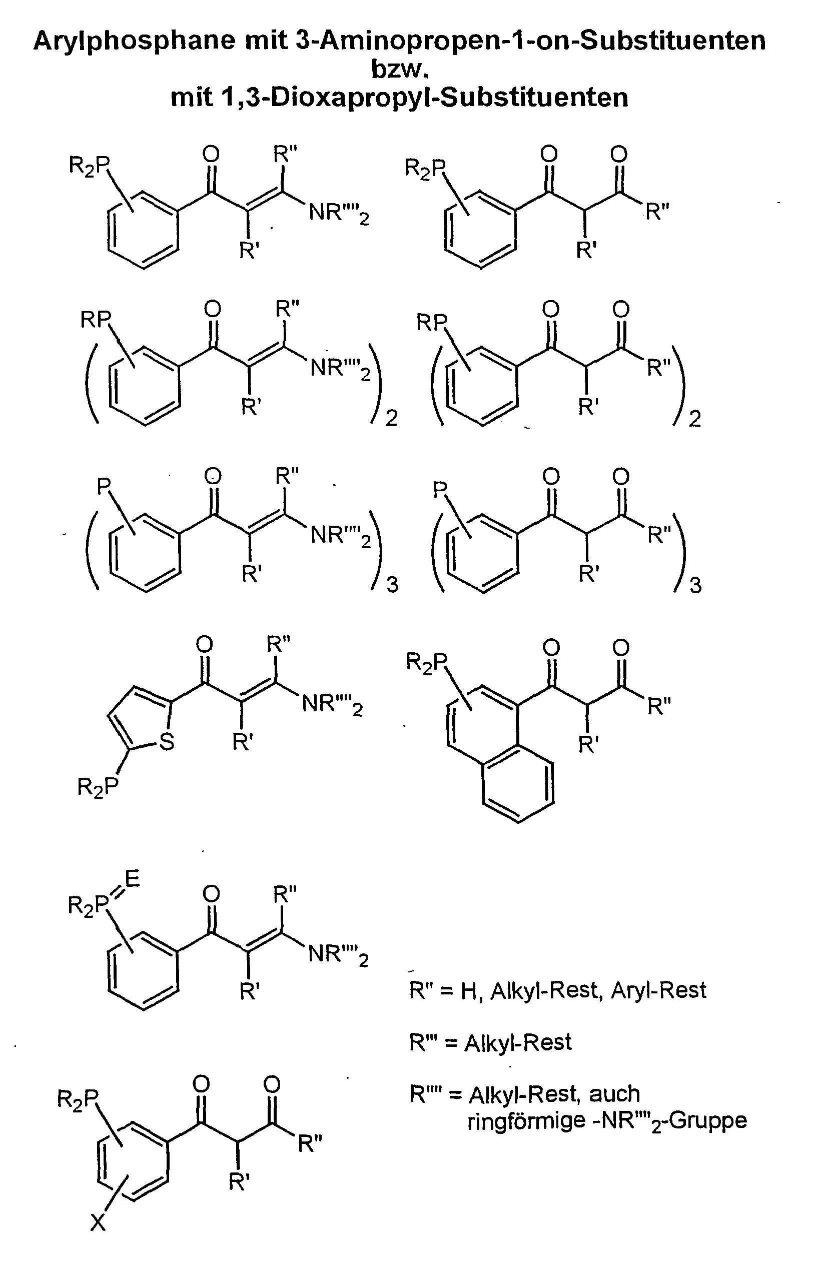

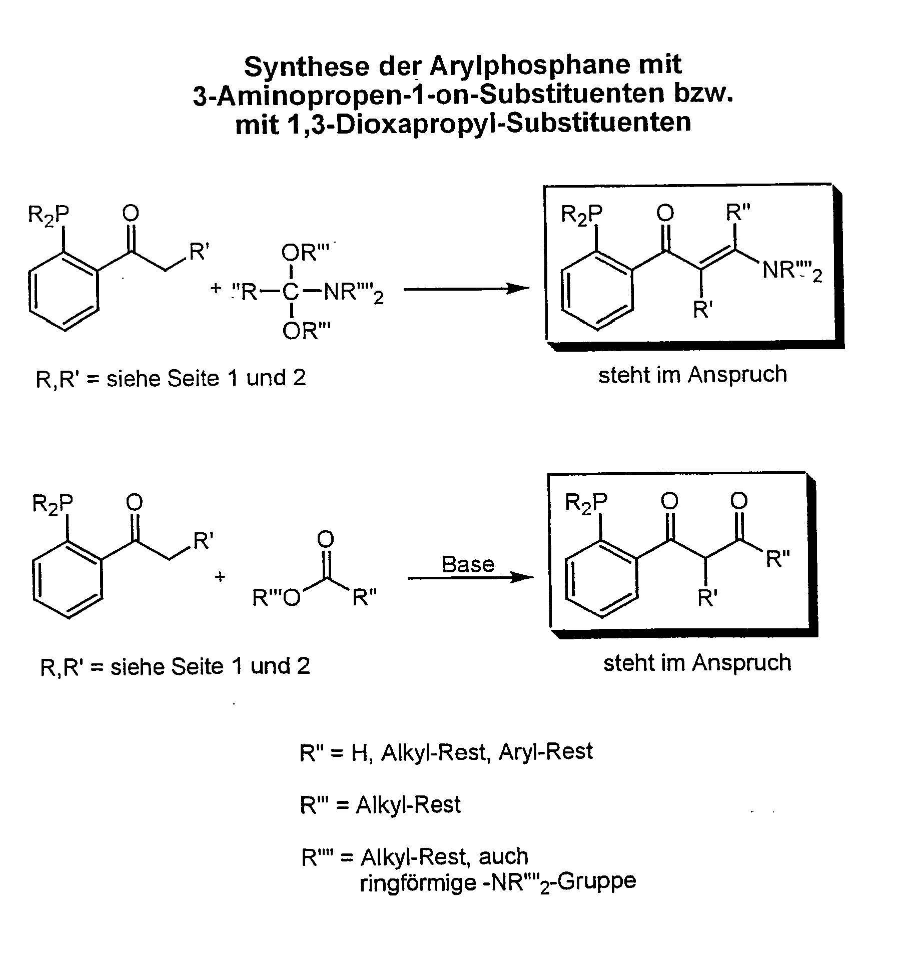

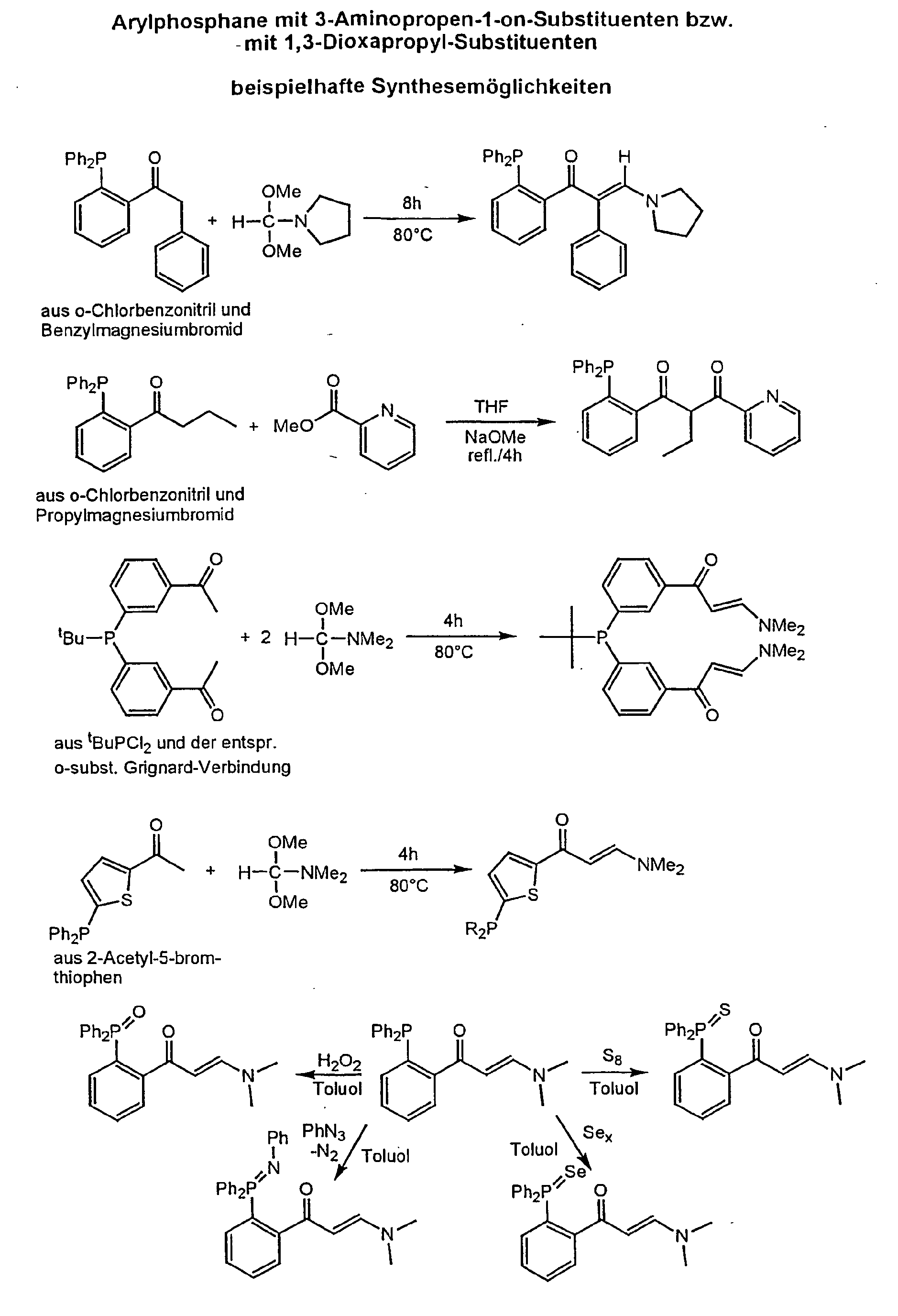

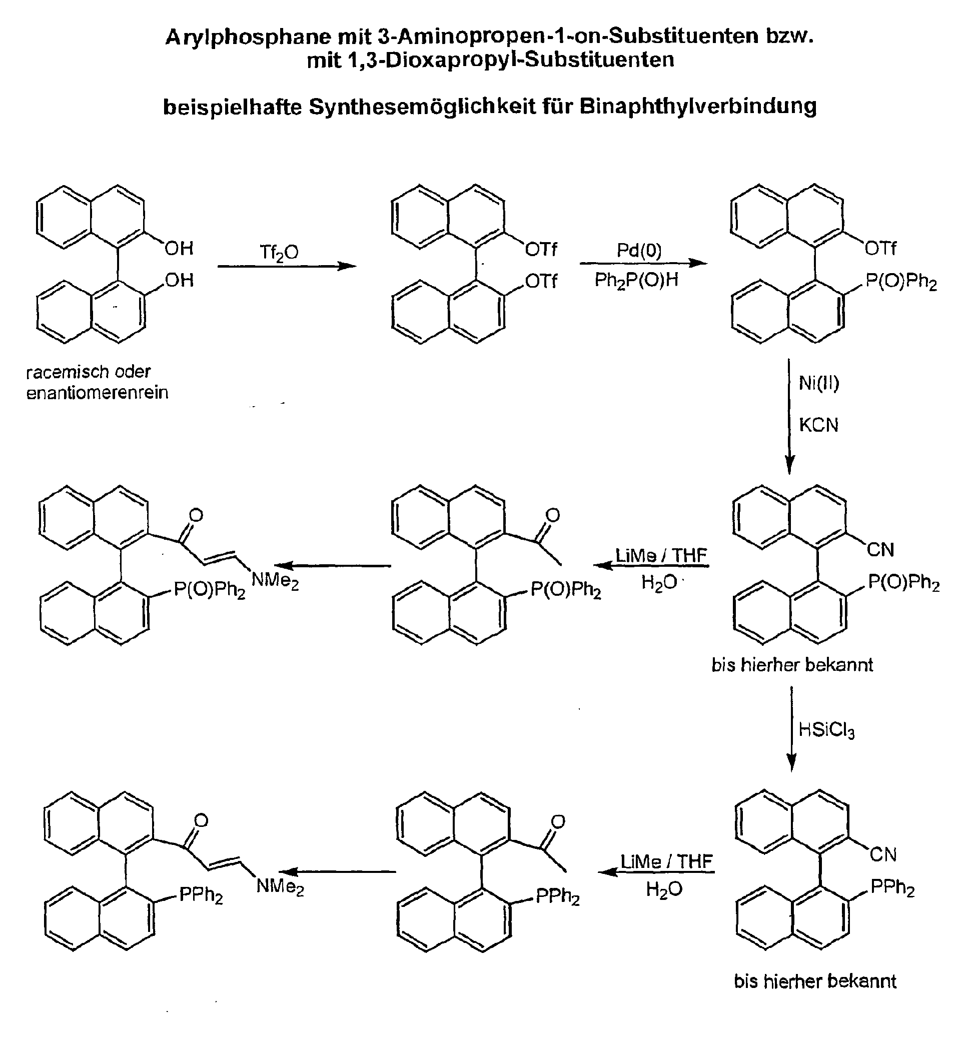

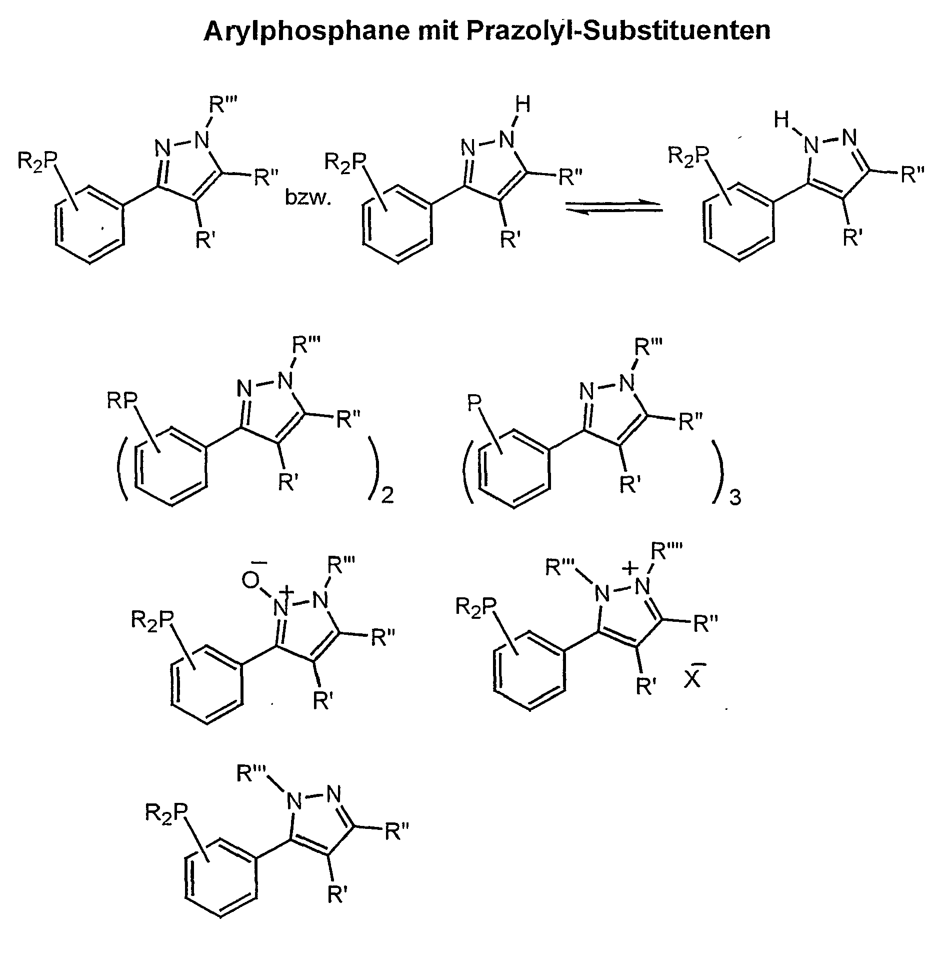

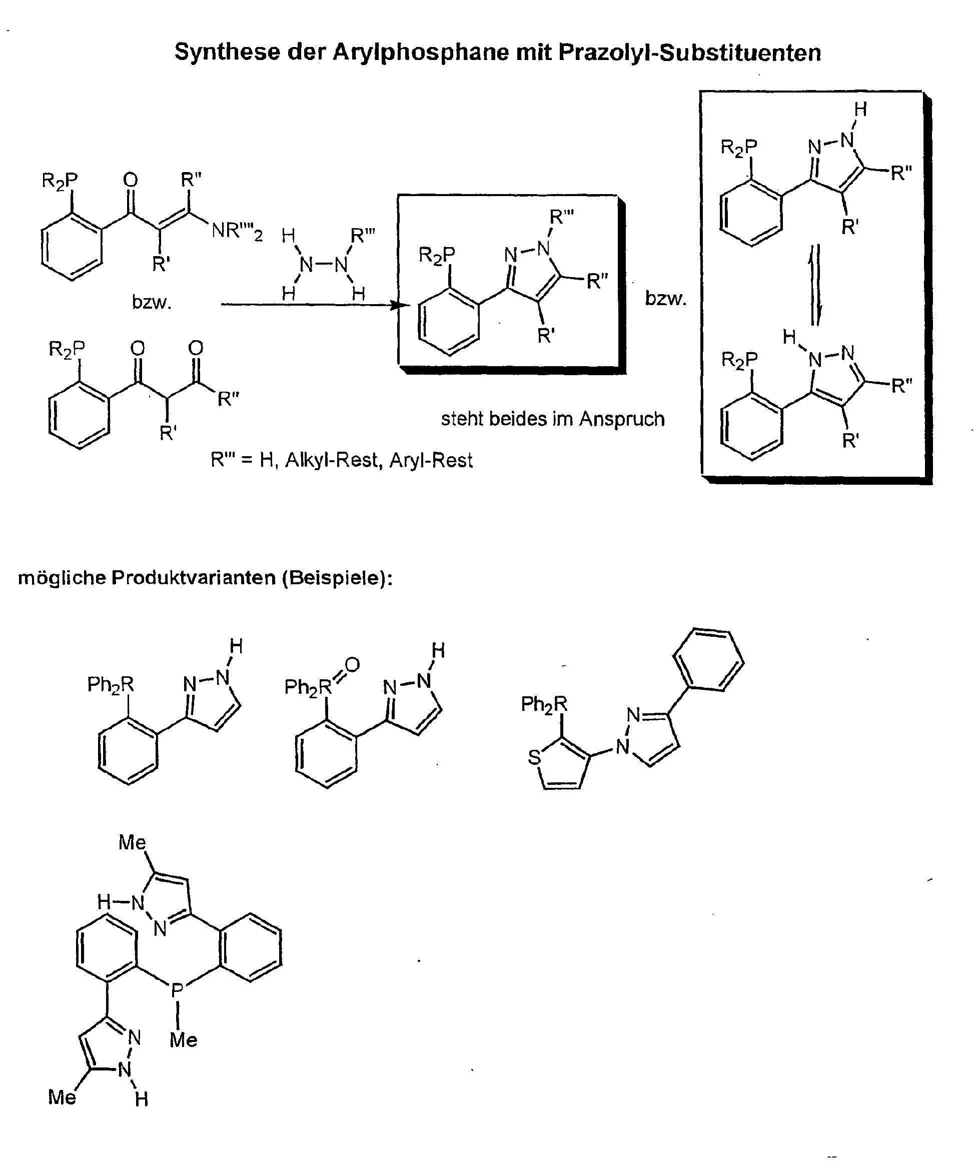

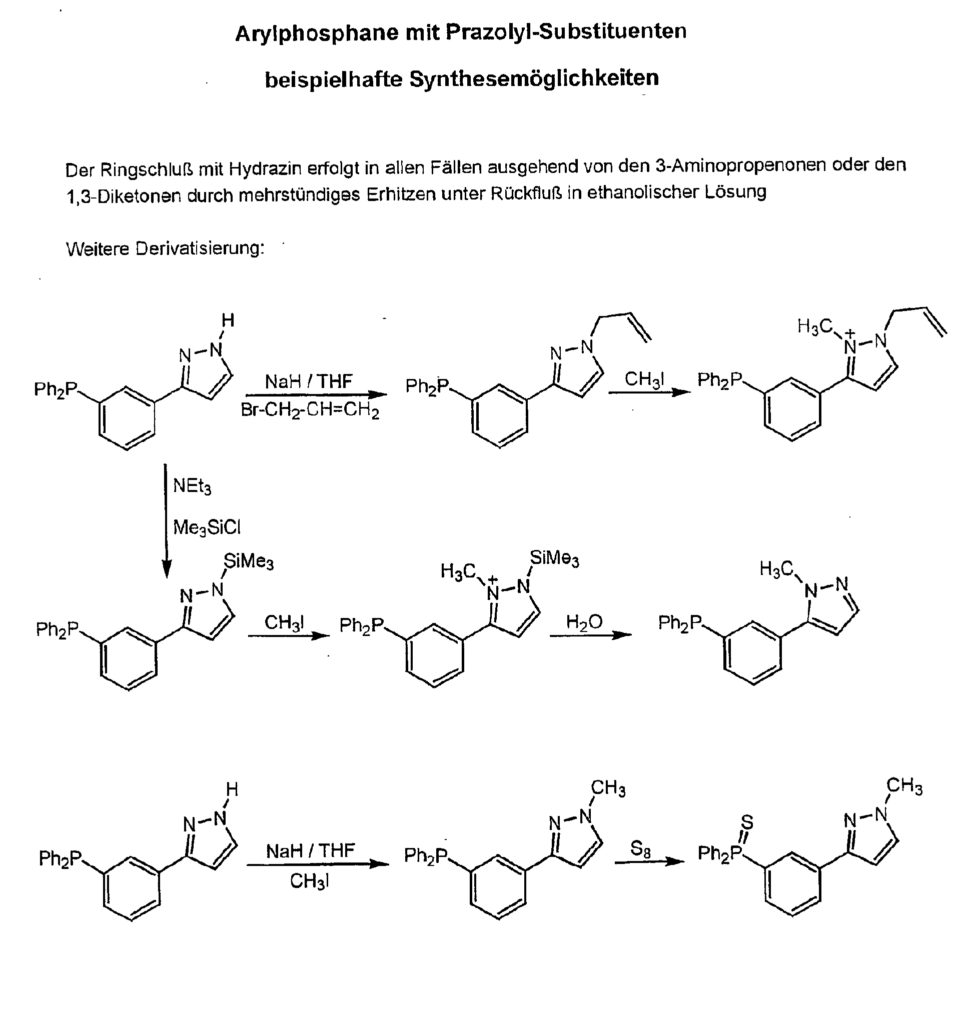

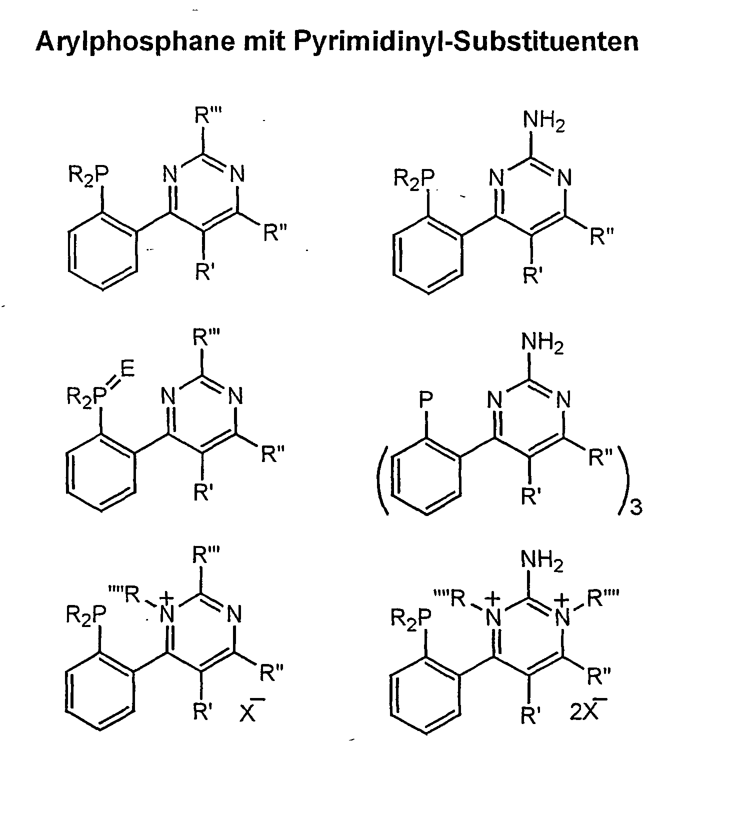

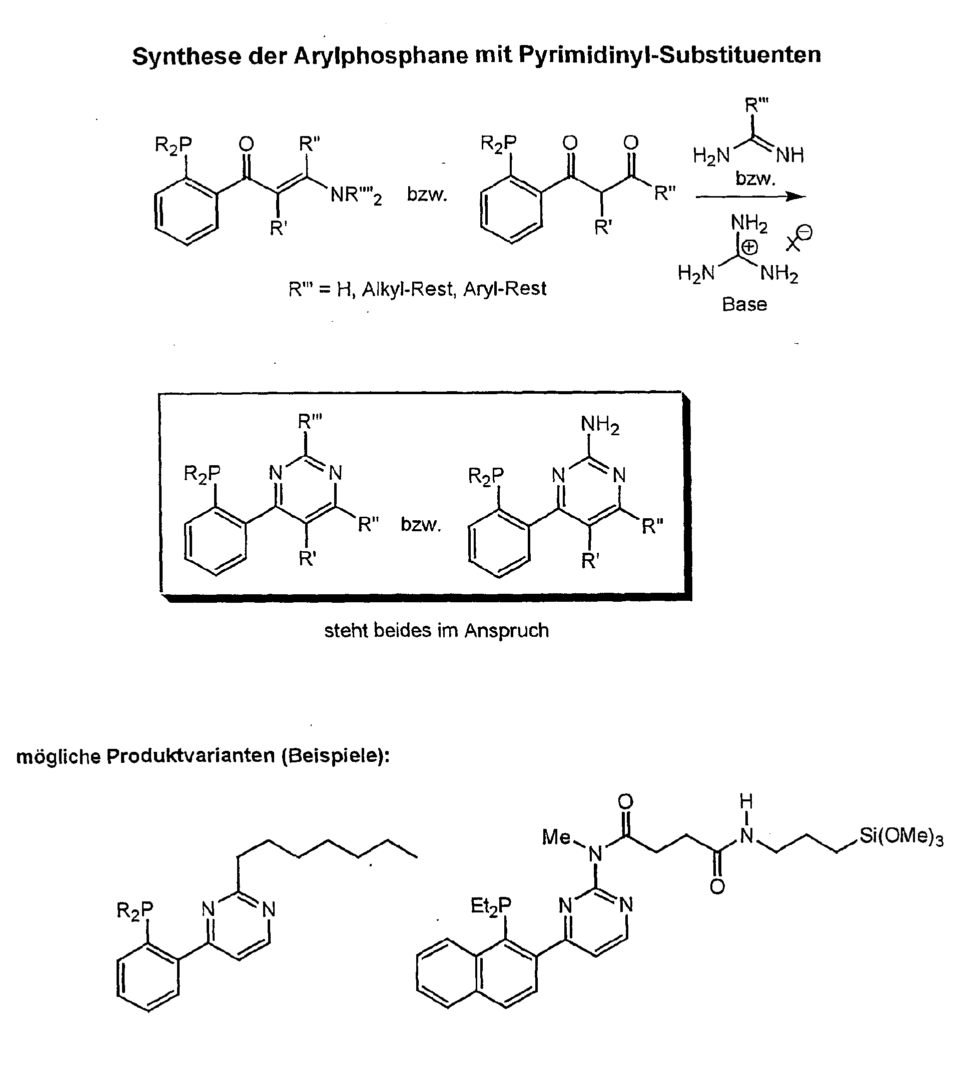

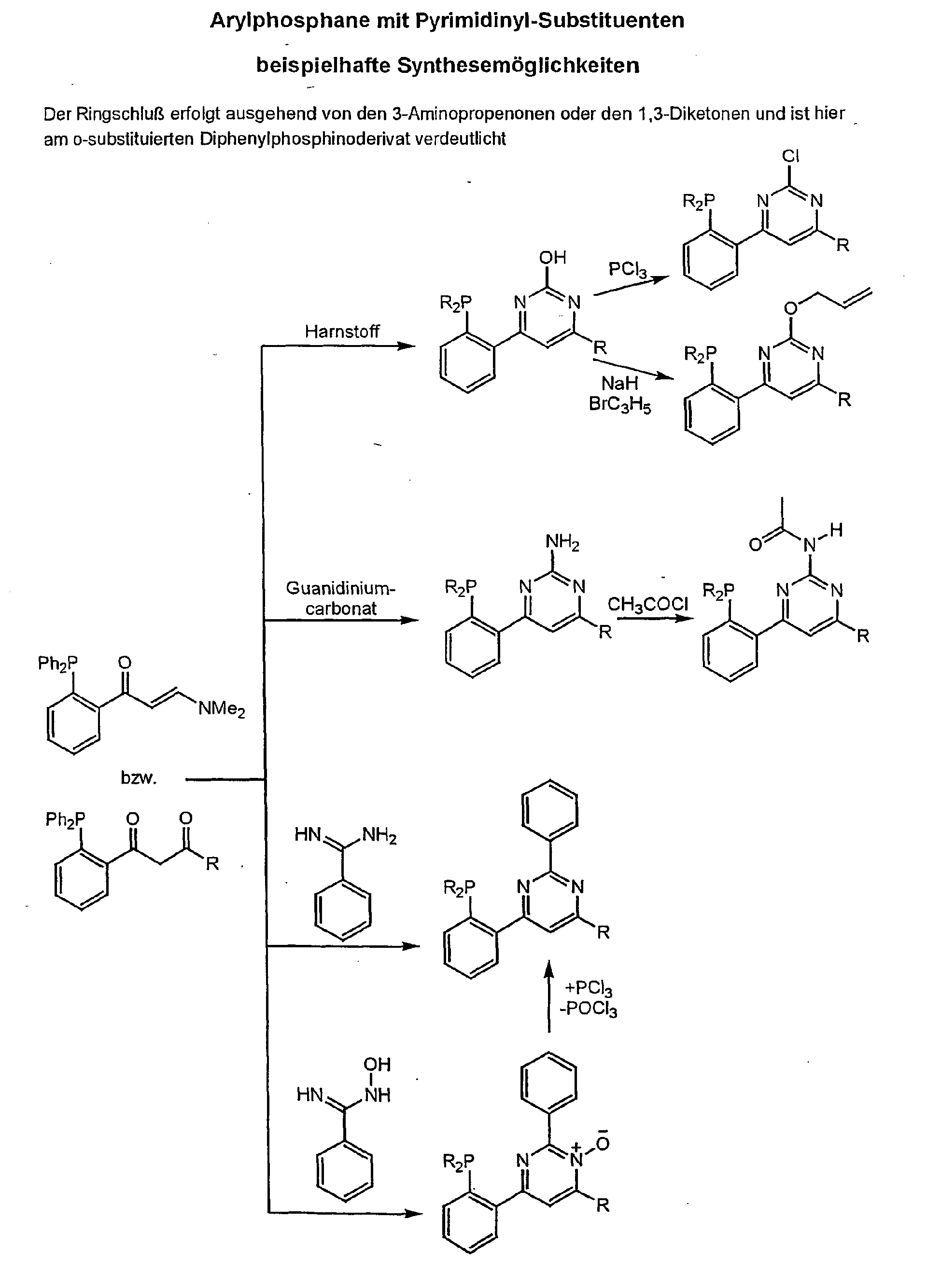

## Patentansprüche

1. Verfahren zur Herstellung substituierter Phosphane, Phosphanoxide, -sulfide oder -selenide, **dadurch gekennzeichnet, dass** Pyrazol- bzw. Pyrimidin-Reste an aromatischen Gruppen für diese Produkte schrittweise, ausgehend von AcetylGruppen, nach folgendem Schema eingeführt werden.

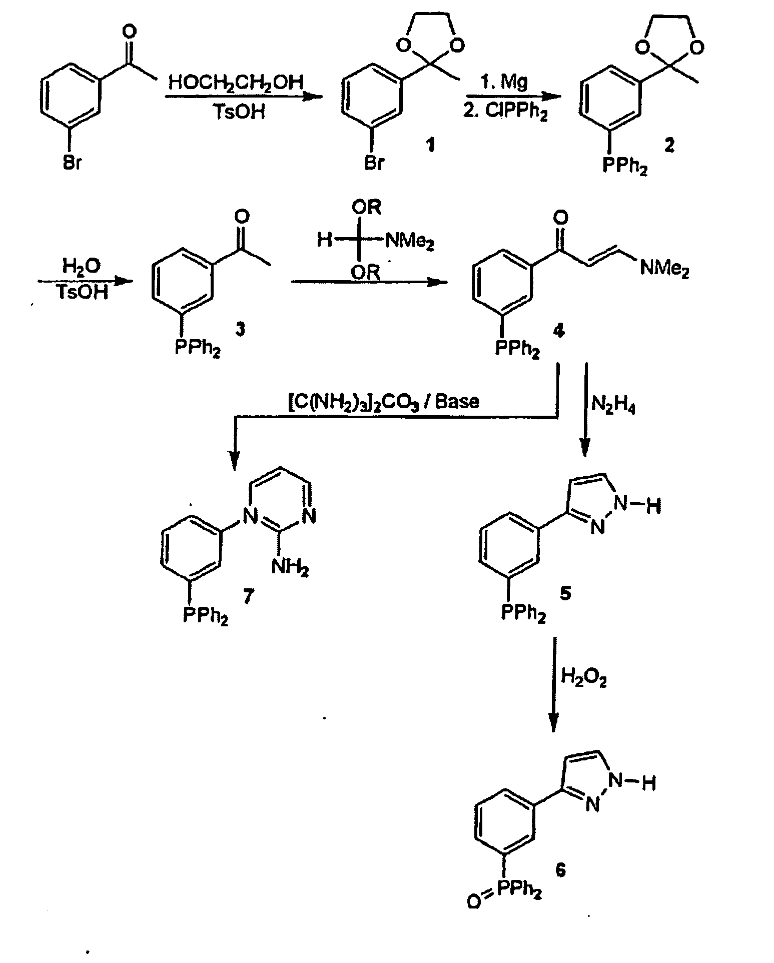

## Claims

1. A method for producing substituted phosphanes, phosphane oxides, phosphane sulfides or phosphane selenides, **characterized in that** pyrazole or pyrimidine residues on aromatic groups are introduced progressively for said products, starting from acetyl groups, according to the following scheme.

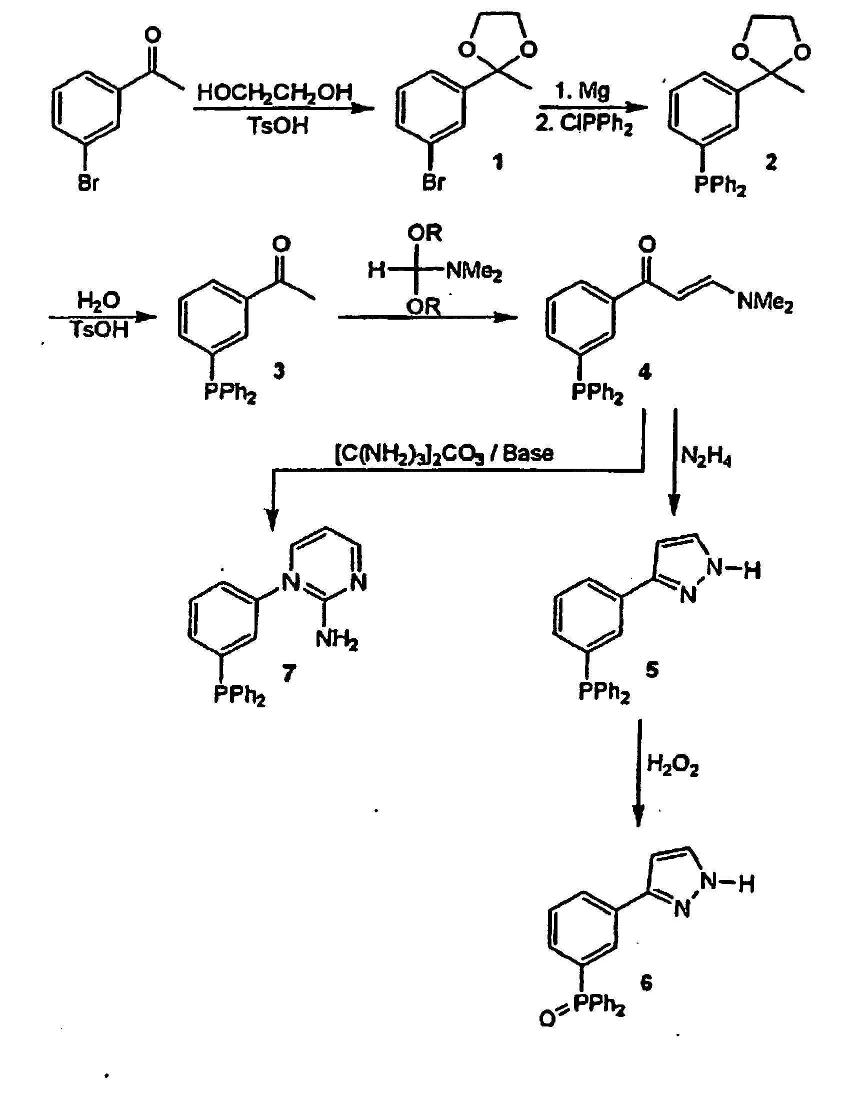

## Revendications

1. Procédé de fabrication de phosphanes, d'oxydes, sulfures ou séléniures de phosphane substitués, **caractérisé en ce que** des restes de pyrazole ou de pyrimidine dans des groupes aromatiques sont introduits progressivement pour ces produits à partir de groupes acétyle suivant le schéma ci-après.
